# EUROPEAN PATENT APPLICATION

(11) **EP 3 822 817 A1**
(43) Date of publication of application: **19.05.2021**
(21) Application number: 19209414.2
(22) Date of filing: 15.11.2019
(51) Int. Cl.: G06F 16/332

(54) **METHOD, SYSTEM AND COMPUTER PROGRAM FOR SEMANTIC TRIPLE-BASED KNOWLEDGE EXTENSION**

(71) Applicant: 42 Maru Inc., Seoul 08801 (KR)
(72) Inventor: KIM, Dong Hwan, 02087 Seoul (KR); KWON, You Kyung, 03491 Seoul (KR); SEONG, Gil Je, 03751 Seoul (KR)
(74) Representative: Studio Torta S.p.A.

(57) **Abstract**

A semantic triple-based knowledge extension system incluides a data updater configured to update existing semantic triple data; a question generating module configured to generate a question by utilizing and combining entity synonyms and attribute synonyms; an actual question obtaining unit configured to obtain actual user questions based on user logs; a semantic triple extractor configured to select a relevant passage candidate group according to characteristics of the question and specify a search target, search for a passage relevant to the corresponding question, and derive a unique instant answer based on a retrieved passage and question data; and a semantic triple conversion module configured to convert a unique instant answer, which is a correct answer, and a question into the form of a semantic triple including an entity, an attribute, and an instant answer.

## Description

### BACKGROUND

### 1. Field

One or more embodiments relate to a system, a method, and a computer program for semantic triple-based knowledge extension, and more particularly, to a system, a method, and a computer program for semantic triple-based knowledge extension capable of providing an accurate and immediate answer to a natural language search.

### 2. Description of Related Art

Human languages are rich, complex, and contain many vocabularies with complex grammar and contextual meanings, but hardware or software applications generally require data to be entered in accordance with certain formats or rules. Here, natural language input is able to be used in almost any software application for interacting with a person. Recently, in a question and answer providing method using natural language, a natural language processor (NLP) module receives a lexical input in the form of a text or a speech and processes the lexical input into a form that is able to be processed on a computer, a processed lexical input passes through a context analyzer for analyzing the context of the processed natural language, answers are classified and finalized by a decision maker that determines an answer according to the context, and a lexical output is output through a response generator for providing an answer to a user according to the finalized answer.

According to the popularization of smart machines including voice recognition speakers and the development of artificial intelligence technology, the information retrieval trend is shifting from a conventional information retrieval scheme based on keyword inputs and document lists to natural language-based sentence inputs and specific answers.

### PRIOR ART DOCUMENTS

### PATENT DOCUMENTS

KR 10-1851787 B1

### SUMMARY

One or more embodiments are to provide a unique instant answer with high accuracy.

One or more embodiments may automatically generate questions and answers and convert them into the form of semantic triples including entities, attributes, and instant answers.

Additional aspects will be set forth in part in the description which follows and, in part, will be apparent from the description, or may be learned by practice of the presented embodiments of the disclosure.

According to one or more embodiments, a semantic triple-based knowledge extension system includes: a data updater configured to update existing semantic triple data; a question generating module configured to generate a question by utilizing and combining entity synonyms and attribute synonyms; an actual question obtaining unit configured to obtain actual user questions based on user logs; a semantic triple extractor configured to obtain a question generated by the question generating module or an actual user question as an input value, first select a relevant passage candidate group according to characteristics of the question and spcifies a search target, search for a passage relevant to the corresponding question, and derive a unique instant answer based on a retrieved passage and question data; and a semantic triple conversion module configured to convert a unique instant answer, which is a correct answer, and a question into the form of a semantic triple including an entity, an attribute, and an instant answer.

In entire semantic triple data, the question generating module may look up and combine entity fields and attribute fields, link an entity DB and an attribute DB by particular categories, and extend the number of questions to be generated by utilizing synonym information.

The semantic triple-based knowledge extension system may further include a screener configured to determine a unique instant answer, which is a correct answer, wherein, when a plurality of unique instant answers obtained based on question data are the same or self-reliability is equal to or higher than a particular critical value, the screener determines the unique instant answers as a correct answer.

According to one or more embodiments, a semantic triple-based knowledge extension method includes: a data updating operation for updating existing semantic triple data; a question generating operation for generating a question by utilizing and combining entity synonyms and attribute synonyms; an actual question obtaining operation for obtaining actual user questions based on user logs; a semantic triple extracting operation for obtaining a question generated by a question generating module or an actual user question as an input value, selecting a first relevant passage candidate group according to characteristics of the question and specifying a search target, searching for a passage relevant to the corresponding question, and deriving a unique instant answer based on a retrieved passage and question data; and a semantic triple conversion operation for converting a unique instant answer, which is a correct answer, and a question into the form of a semantic triple including an entity, an attribute, and an instant answer.

In the question generating operation, in the entire semantic triple data, entity fields and attribute fields may be looked up and combined, an entity DB (DB) and an attribute DB may be linked by particular categories, and the number of questions to be generated may be extended by utilizing synonym information.

The semantic triple-based knowledge extension method may further include a screening operation for determining a unique instant answer, which is a correct answer, wherein, in the screening operation, when a plurality of unique instant answers obtained based on question data are the same or self-reliability is equal to or higher than a particular critical value, the unique instant answers are determined as a correct answer.

According to one or more embodiments, a semantic triple-based knowledge extension system includes: a question generating module configured to generate a question by utilizing and combining entity synonyms and attribute synonyms; a semantic triple extractor configured to derive a unique instant answer for the generated question; a screener configured to determine a result of the semantic triple extractor and generate a unique instant answer, which is a correct answer, and a question; and a semantic triple conversion module configured to convert a unique instant answer, which is a correct answer, and a question into the form of a semantic triple including an entity, an attribute, and an instant answer.

The semantic triple extractor may include: a passage searching module configured to perform search target targeting by first selecting a passage candidate group having relevance according to the characteristics of a question and search for a passage related to the question; and a machine reading comprehension question and answer module configured to derive a unique instant answer based on an obtained passage and question data and derive a unique instant answer and a reliability of a corresponding answer for each of passages.

In entire semantic triple data, the question generating module may look up and combine entity fields and attribute fields, link an entity DB (DB) and an attribute DB by particular categories, and extend the number of questions to be generated by utilizing synonym information.

According to one or more embodiments, a semantic triple-based knowledge extension method includes: a question generating operation for generating a question by utilizing and combining entity synonyms and attribute synonyms; a semantic triple extracting operation for deriving a unique instant answer for the generated question; a screening operation for determining a result of a semantic triple extractor and generating a unique instant answer, which is a correct answer and a question; and a semantic triple conversion operation for converting a unique instant answer, which is a correct answer, and a question into the form of a semantic triple including an entity, an attribute, and an instant answer.

The semantic triple extracting operation may include: a passage searching operation for performing search target targeting by first selecting a passage candidate group having relevance according to the characteristics of a question and searching for a passage related to the question; and a machine reading comprehension question and answer operation for deriving a unique instant answer based on an obtained passage and question data and deriving a unique instant answer and a reliability of a corresponding answer for each of passages.

In the question generating operation, in entire semantic triple data, entity fields and attribute fields may be looked up and combined, an entity DB (DB) and an attribute DB may be linked by particular categories, and the number of questions to be generated may be extended by utilizing synonym information.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram showing an example of a network environment according to an embodiment;
FIG. 2 is a block diagram showing internal configurations of a user terminal and a server according to an embodiment;
FIG. 3 is a diagram showing an internal configuration of a processor of a server according to an embodiment;
FIGS. 4 and 5 are diagrams showing a semantic triple-based knowledge extension method according to an embodiment in a time-series;
FIG. 6 is a diagram for describing a semantic triple-based knowledge extension system according to an embodiment;
FIG. 7 is a diagram for describing a semantic triple-based knowledge extension method according to an embodiment; and
FIG. 8 is a diagram showing the operations of a question generating module according to an embodiment in a time series.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

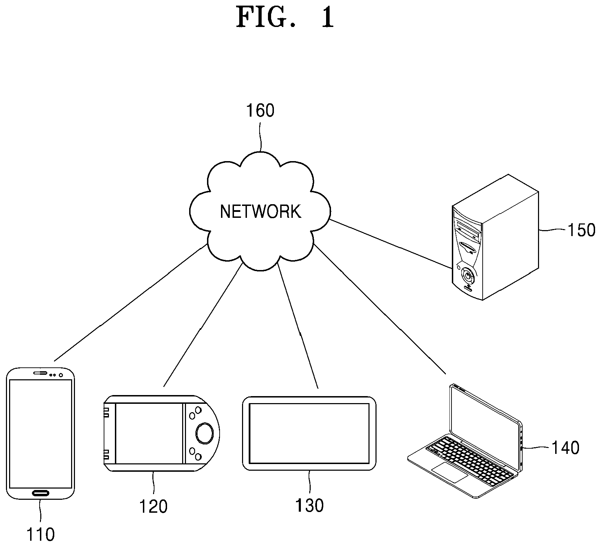

FIG. 1 is a diagram showing an example of a network environment according to an embodiment.

FIG. 1 exemplifies a network environment including a plurality of user terminals 110, 120, 130, and 140, a server 150, and a network 160. However, it is merely an example, and the number of user terminals and the number of servers are not limited those shown in FIG. 1.

The plurality of user terminals 110, 120, 130, and 140 may be stationary terminals or mobile terminals implemented as computer devices. Examples of the plurality of user terminals 110, 120, 130, and 140 include a smart phone, a mobile phone, a navigation device, a computer, a laptop computer, a digital broadcasting terminal, a personal digital assistant (PDA), a portable multimedia player (PMP)., a tablet PC, etc. For example, a first user terminal 110 may communicate with other user terminals 120, 130, and 140 and/or the server 150 via the network 160 by using a wireless or wired communication protocol.

The communication protocol is not limited and may include not only a communication protocol utilizing a communication network (e.g., a mobile communication network, a wired Internet, a wireless Internet, and a broadcasting network) that the network 160 may include, but also short range wireless communication between devices. For example, the network 160 may include one or more networks including a personal area network (PAN), a local area network (LAN), a campus area network (CAN), a metropolitan area network (MAN), a wide area network (WAN), and a broadband network (BBN), and the Internet. Also, the network 160 may include one or more of network topologies including a bus network, a star network, a ring network, a mesh network, a star-bus network, a tree or a hierarchical network, but is not limited thereto.

The server 150 may be implemented by a computer device or a plurality of computer devices that communicate with the plurality of user terminals 110, 120, 130, and 140 through the network 160 and provide instructions, code, files, content, services, and the like.

For example, the server 150 may provide a file for installing an application to the first user terminal 110 connected through the network 160. In this case, the first user terminal 110 may install the application using the file provided from the server 150. Also, under the control of an operating system (OS) included in the first user terminal 110 and at least one program (e.g., a browser or an installed application), the user terminal 110 may be connected to the server 150 and receive a service or content from the server 150. For example, when the first user terminal 110 transmits a content view to the server 150 through the network 160 under the control of an application, the server 150 may transmit a unique instant answer using a semantic triple-based knowledge extension system to the first user terminal 110, and the first user terminal 110 may display the unique instant answer under to the control of the application. In another example, the server 150 may establish a communication session for data transmission and reception and route data transmission and reception between the plurality of user terminals 110, 120, 130, and 140 through the established communication session.

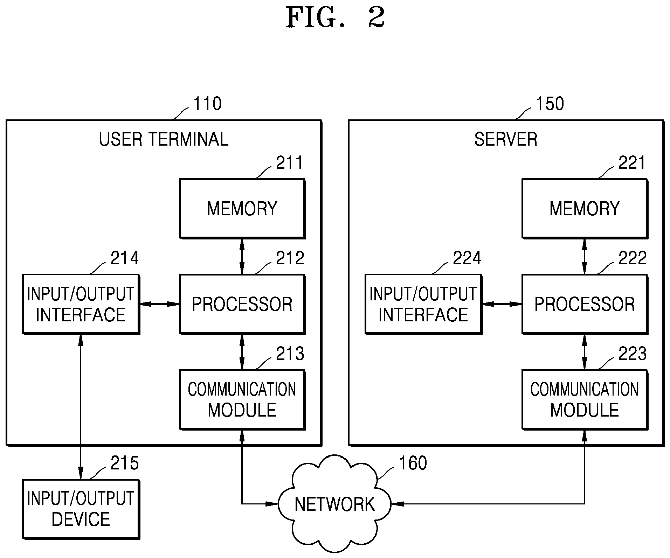

FIG. 2 is a block diagram showing internal configurations of a user terminal and a server according to an embodiment.

In FIG. 2, an internal configuration of the first user terminal 110 will be described as an example of one user terminal and an internal configuration of the server 150 will be described as an example of one server. The other user terminals 120, 130, and 140 may also have the same or similar internal configurations.

The first user terminal 110 and the server 150 may include memories 211 and 221, processors 212 and 222, communication modules 213 and 223, and input/output interfaces 214 and 224. The memories 211 and 221 may include computer-readable recording media and may include permanent mass storage devices such as random access memories (RAM), read only memories (ROM), and disk drives. Also, the memories 211 and 221 may store an OS and at least one program code (e.g., code for a browser or the above-described application installed and driven on the first user terminal 110). These software components may be loaded from a computer-readable recording medium separate from the memories 211 and 221 by using a drive mechanism. Such a separate computer-readable recording medium may include a computer-readable recording medium such as a floppy drive, a disk, tape, a DVD/CD-ROM drive, a memory card, etc. In another embodiment, software components may be loaded into the memories 211 and 221 through the communication modules 213 and 223 rather than a computer-readable recording medium. For example, at least one program may be loaded to the memories 211 and 221 based on a program (e.g., the above-stated application) installed by files provided by developers or a file distribution system (e.g., the server 150), which distributes installation files of applications, through the network 160.

The processors 212 and 222 may be configured to process instructions of a computer program by performing basic arithmetic, logic, and input/output operations. Instructions may be provided to the processors 212 and 222 by the memories 211 and 221 or the communication modules 213 and 223. For example, the processors 212 and 222 may be configured to execute instructions received according to program code stored in a recording device such as the memories 211 and 221.

The communication modules 213 and 223 may provide a function for the first user terminal 110 and the server 150 to communicate with each other through the network 160 and a function to communicate with another user terminal (e.g., a second user terminal 120) or another server (e.g., the server 150). For example, a request generated by the processor 212 of the first user terminal 110 according to program code stored in a recording device such as the memory 211 may be transmitted to the server 150 through the network 160 under the control of the communication module 213. Conversely, control signals, instructions, content, and files provided under the control of the processor 222 of the server 150 may be transmitted through the communication module 223, the network 160, and the communication module 213 of the first user terminal 110 and received by the first user terminal 110. For example, control signals or instructions of the server 150 received through the communication module 213 may be transmitted to the processor 212 or the memory 211, and content or files may be transmitted to a storage medium that the first user terminal 110 may further include.

The input/output interfaces 214 and 224 may be units for interfacing with the input/output device 215. For example, an input device may include a device such as a keyboard or mouse, and an output device may include a device such as a display for displaying a communication session of an application. In another example, the input/output interface 214 may be a unit for interfacing with a device in which inputting and outputting functions are integrated into one, such as a touch screen. More particularly, when the processor 212 of the first user terminal 110 processes instructions of a computer program loaded to the memory 211, a service screen or content constructed by using data provided by the server 150 or the second user terminal 120 may be displayed on a display through the input/output interface 214.

Also, in other embodiments, the first user terminal 110 and the server 150 may include more components than those shown in FIG. 2. However, it is not necessary to clearly show most of the prior art components. For example, the first user terminal 110 may be implemented to include at least a portion of the input/output device 215 described above or may further include other components like a transceiver, a global positioning system (GPS) module, a camera, various sensors, and a DB.

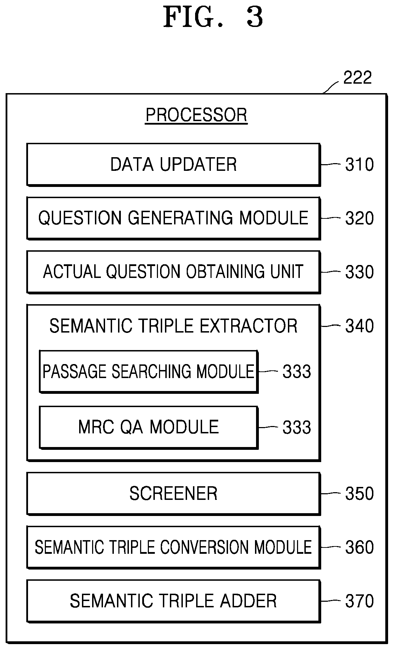

FIG. 3 is a diagram showing an internal configuration of a processor according to an embodiment.

The processor 222 may include a web browser or an application capable of receiving and outputting a web page online. As shown in FIG. 3, the semantic triple-based knowledge extension system according to an embodiment in the processor 222 may include a data updater 310, a question generating module 320, an actual question obtaining unit 330, a semantic triple extractor 340, a screener 350, a semantic triple conversion module 360, and a semantic triple adder 370. In some embodiments, the components of the processor 212 may be selectively included in or excluded from the processor 212. Also, in some embodiments, the components of the processor 212 may be separated or merged to represent the functions of the processor 212.

Here, the components of the processor 212 may be representations of different functions of the processor 212 that are performed by the processor 212 according to instructions provided by program code stored in the first user terminal 110 (e.g., instructions provided by a web browser driven on the first user terminal 110).

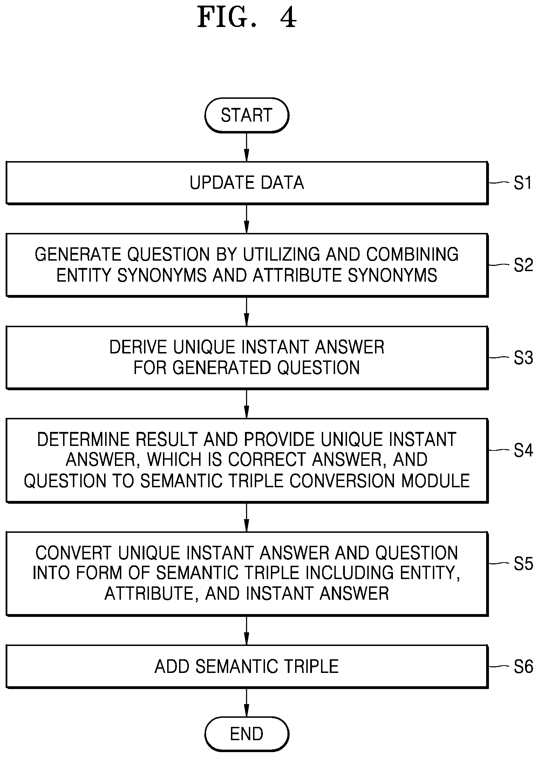

The processor 212 and the components of the processor 212 may control the first user terminal 110 to perform operations S1 to S6 included in a semantic triple-based knowledge extension method of FIG. 4. For example, the processor 212 and the components of the processor 212 may be implemented to execute instructions according to code of OS and code of at least one program that is included in the memory 211.

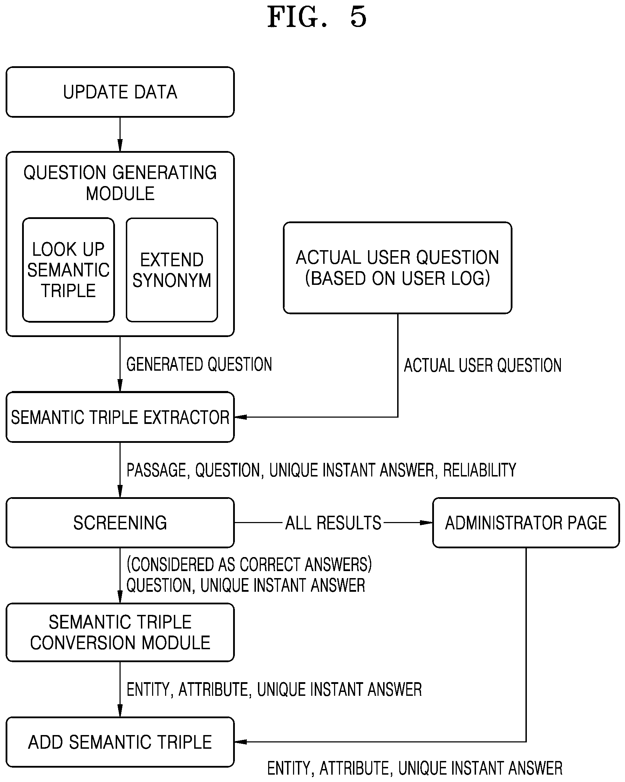

FIGS. 4 and 5 are diagrams showing a semantic triple-based knowledge extension method according to an embodiment in a time-series. Hereinafter, a method, a system, and a computer program for semantic triple-based knowledge extension will be described in detail with reference to FIGS. 3 and 4.

To this end, first, differences between a semantic triple-based knowledge extension method according to one or more embodiments and existing search engines will be described. A semantic triple-based knowledge extension system according to one or more embodiments may provide a unique instant answer based on accuracy. A semantic triple-based knowledge extension method according to one or more embodiments may differ from existing search engines in that search results are provided in the form of a unique instant answer, that is, an immediate answer instead of a document.

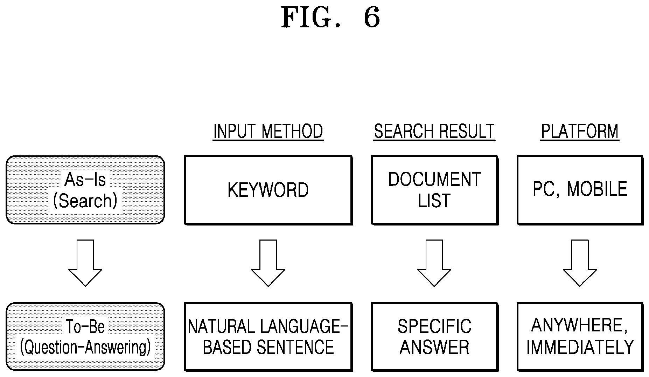

FIG. 6 is a diagram for describing a semantic triple-based knowledge extension system according to an embodiment.

Referring to FIG. 6, existing search engines (As-Is and Search) receive inputs of keywords and provide a document list as a search result, and search platforms therefor operate on a PC or a mobile device.

On the contrary, a semantic triple-based knowledge extension system (To-Be, Question-Answering) receives inputs of natural language-based sentences and may provide a detailed response, that is, an instant unique response as a search result, and a platform therefor may be implemented anywhere without being limited to a PC or a mobile device.

In detail, the semantic triple-based knowledge extension system according to one or more embodiments allows a user to input a natural language-based sentence while existing search engines need inputs of keywords, thereby allowing the user to naturally search for information like as the user asks a question to a person. Also, the semantic triple-based knowledge extension system according to one or more embodiments provides a detailed response as a search result, thereby reducing the inconvenience of a user for finding a search result directly from a list of documents provided by existing search engines and providing an optimal search result. Also, a platform for the semantic triple-based knowledge extension system according to one or more embodiments is based on a smart machine without being limited to a PC or a mobile device, and thus information may be immediately searched for anywhere. Hereinafter, configurations of a system and a method for semantic triple-based knowledge extension according to one or more embodiments will be described in detail with reference to FIGS. 3 and 4.

First, the data updater 310 obtains previously generated semantic triple-type data and updates new data or data related to a user question when it occurs (operation S1). Here, the semantic triple-based knowledge extension method according to an embodiment assumes that semantic triple-type data has been already created as existing data. In other words, when a data update such as new data and a user question does not occur, a data updating process according to one or more embodiments does not occur.

Examples of data updates to perform the semantic triple-based knowledge extension method according to one or more embodiments may vary. According to an embodiment, when new information such as a document or a database (DB) is updated, when a user leaves a new question by using a question and answer (QA) service according to one or more embodiments, or when there is a change in the entire data, the data updater 310 may update data. According to an embodiment, the data updater 310 may perform data update periodically or according to a user request.

Next, the question generating module 320 generates a question by utilizing and combining entity synonyms and attribute synonyms. In detail, the question generating module 320 generates a question based on semantic triple data when performing the semantic triple-based knowledge extension method according to an embodiment. The semantic triple-based knowledge extension system may be performed at the time of a data update, periodically, or according to a user request.

Alternatively, when a user adds a rule for generating a question in an administrator page described below, a question may be generated based on the rule.

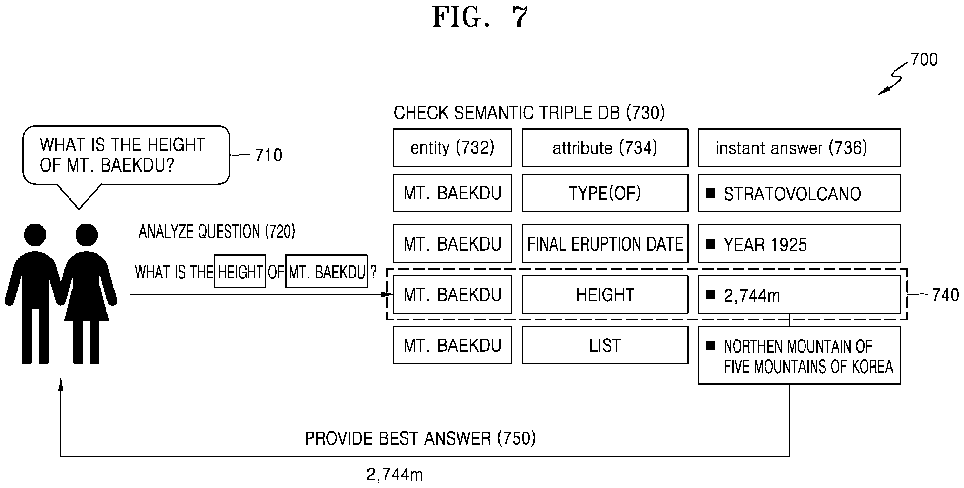

FIG. 7 is a diagram for describing a semantic triple-based knowledge extension method according to an embodiment.

FIG. 7 shows an example of performing a semantic triple-based search according to an embodiment.

A semantic triple DB is a particular type of knowledge-based DB that simulates questions of actual users and a unique instant answer may be searched for without any additional reasoning. The semantic triple DB has the form of entity 732-attribute 734-instant answer 738.

In FIG. 7, when a user question 710 "What is the height of Mt. Baekdu?" is received, key words "Mt. Baekdu" and "height" may be extracted and "Mt. Baekdu" may be analyzed as an entity of the user question 710 and "height" may be analyzed as an intention of the user question 710.

The administrator setting unit checks the semantic triple DB 730, searches for data with the entity = "Mt. Baekdu" and the attribute = "height", determines an instant answer of the corresponding items as a result, and provides a corresponding answer 750 of 2,744m to a user. The semantic triple DB as described above may provide an optimal answer without searching for a best answer.

The administrator setting unit checks the forms of the user question and the unique instant answer to store a best answer value determined by the screener based on the semantic triple, converts a user question into the entity 732 and the attribute 734, and converts the unique instant answer into the instant answer 738. In this case, a question transformation process includes a natural language comprehension technique and a semantic triple entity/attribute data retrieval technique.

The semantic triple is a special type of knowledge base that simulates questions of actual users and may be considered as a unique DB. The semantic triple DB has the form of entity-attribute-instant answer, and because of this type, a unique instant answer may be searched for without any additional inference process.

For example, when there is a question "What is the height of Mt. Baekdu?", the question is first analyzed to analyze 'Mt. Baekdu' as an entity and 'height' as an attribute. Then, the semantic triple DB is looked up to search for data with the entity = "Mt. Baekdu" and the attribute = "height", determines an instant answer of the corresponding items as a result, and provides a corresponding answer.

In detail, the question generating module 320 operates to add a synonym extension function based on the semantic triple DB. Hereinafter, an operation of the question generating module 320 will be described in detail with reference to FIG. 7.

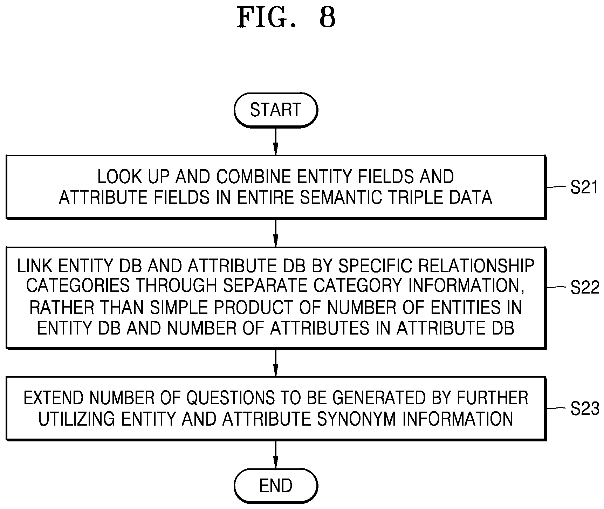

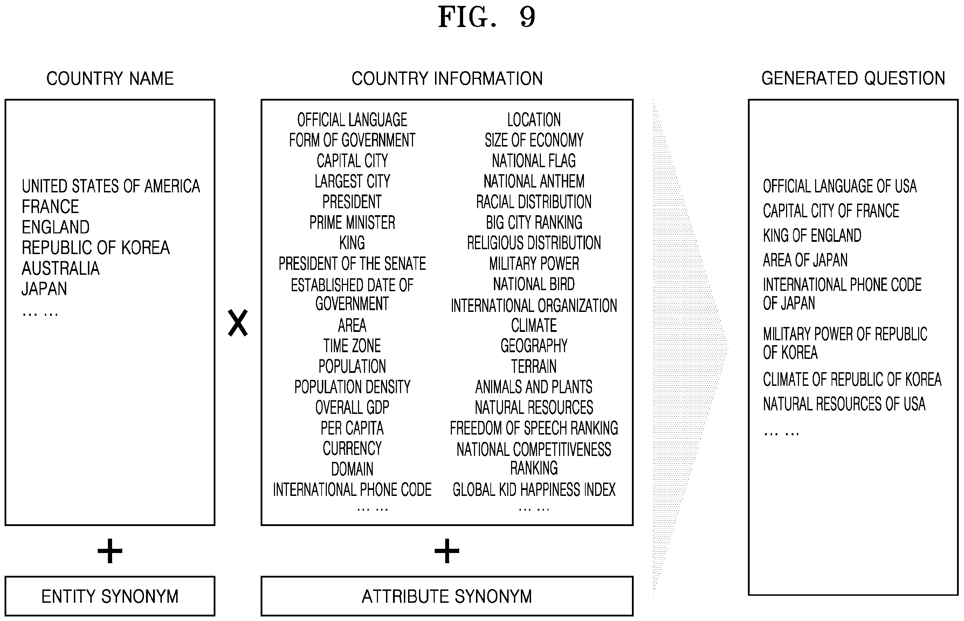

FIG. 8 is a diagram showing the operations of a question generating module according to an embodiment in a time series.

Referring to FIG. 8, the question generating module 320 first looks up and combines an entity field and an attribute field in the entire semantic triple data (operation S21). For example, when Mt. Baekdu is an entity and the latest eruption date is an attribute, a new question "Mt. Baekdu's latest eruption date?" is created by combining the entity and the attribute. In this case, the number of possible questions will be the product of the number of entities in an entity DB and the number of attributes in an attribute DB.

Next, the question generating module 320 may link the entity DB and the attribute DB by specific relationship categories through separate category information, rather than the simple product of the number of entities in the entity DB and the number of attributes in the attribute DB (operation S22). According to an embodiment, operation S22 may proceed simultaneously with operation S21.

In detail, when the entity is a person's name according to an embodiment and it is assumed that only the number of questions is the product of the number of entities in the entity DB and the number of attributes in the attribute DB as in operation S21, questions are generated as simple products of entity data and attribute data, and thus, ineligible data like [entity: Yi, Soon Shin/ attribute: release date/ generated question: release date of Yi, Soon Shin] may be generated. To prevent generation of such ineligible data as described above, the question generating module 320 according to an embodiment may generate a question by using only relevant entity and attribute information by utilizing category information.

Next, the question generating module 320 further extends the number of questions to be generated by further utilizing entity and attribute synonym information (operation S23). At this time, the total number of questions may be (entity + entity synonyms) * (attribute + attribute synonyms) for each relevant category.

FIG. 8 is a diagram for describing question expansion according to an embodiment.

Referring to FIG. 8, when entities are [USA, France, UK, South Korea, ...] belonging to a country name category, entity synonyms may be [USA, Korea, ...]. Also, when attributes are [official language, form of government, capital city, largest city, king ...] belonging to a country information category, attribute synonyms may be [queen, republic, state capital, ...]. By considering synonyms in this regard, the number of questions may be extended.

Meanwhile, according to an embodiment, the question generating module 320 may generate questions based on all entities and all attributes without category classification. When such questions are evaluated as less suitable by the administrator, the questions may be filtered by a semantic triple extractor and through a screening process. For example, when a unique instant answer already exists in a generated question, the question may not be input to the semantic triple extractor.

Also, the actual question obtaining unit 330 may input an actual user question based on a user log to the semantic triple extractor 340.

Next, the semantic triple extractor 340 obtains a question generated by the question generating module 320 or an actual user question as an input value and derives a unique instant answer for the generated question (operation S3). The semantic triple extractor 340 may include a passage searching module 341 and a machine reading comprehension (MRC) question and answer (QA) module 342.

The passage searching module 341 performs search target targeting by first selecting a passage candidate group having relevance according to the characteristics of a question. Next, the passage searching module 341 searches for a passage related to the corresponding question and transmits the retrieved passage to the MRC QA module 342. Also, the passage searching module 341 may extract a plurality of passages from one document or a plurality of passages from a plurality of documents. Also, the passage searching module 341 may derive a passage by applying a TF-IDF algorithm commonly used in existing search engines. Also, the passage searching module 341 may deliver the top N results corresponding to any particular score or higher scores to the MRC QA module 342.

The MRC QA module 342 may receive a given passage result and derive a unique instant answer based on the passage and question data. Also, the MRC QA module 342 may derive a unique instant answer and the reliability of a corresponding correct answer for each passage. Also, the MRC QA module 342 may include a plurality of MRC QA algorithms.

Finally, the semantic triple extractor 340 transmits unique instant answers and reliabilities derived by the MRC QA module 342 to the screener 350.

Next, the screener 350 determines a result obtained from the semantic triple extractor 340 and provides a unique instant answer, which is a correct answer, and a question to the semantic triple conversion module 360 (operation S4). In detail, the screener 350 may check a result received from the semantic triple extractor 340 and determine whether the result is a correct answer. The screener 350 determines that an answer is correct when a plurality of results based on self reliability from the MRC QA module 342 and question data are the same.

In detail, the screener 350 determines that an answer is correct when self reliability is equal to or higher than a certain critical value. According to an embodiment, the certain critical value may be initially set to a default value and may later be automatically changed considering an actual answer derivation history and question patterns. For example, even when the initial critical value is set to 90%, when an actual correct answer derivation history is checked and answers corresponding to reliability of 85% or higher have been selected as correct answers for country-related questions, the screener 350 may automatically renew the critical value regarding country-related questions from 90% to 85%.

Also, when a plurality of unique instant answers obtained based on question data are the same, the screener 350 may determine the unique instant answer as a correct answer. Also, the screener 350 may preferentially consider a case where a plurality of results are the same as the correct answer when the self-reliability is equal to or greater than a certain critical value and when the result of the plurality of results is the same.

Also, when the self reliability of an MRC QA algorithm is less than a particular critical value, the screener 350 may determine the unique instant answers as wrong answers when the corresponding unique instant answers are not the same as one another, and when the corresponding unique instant answers based on question data are not the same as one another.

After determining a correct answer and wrong answers, the screener 350 may transmit data determined as the correct answer to the semantic triple conversion module 360. Information obtained by the semantic triple conversion module 360 includes question data and unique instant answers.

According to an embodiment, the screener 350 transmits all results determined as correct answers to the administrator page and stores the results, such that a person may later add the results to the semantic triple data after manual confirmation. At this time, the stored results include passages, questions, unique instant answers, reliabilities, and MRC QA module information used.

Next, the semantic triple conversion module 360 may convert unique instant answers and questions into semantic triples in the form of entities, attributes, and instant answers. In detail, the semantic triple conversion module 360 may obtain data determined by the screener 350 as correct answers and convert the data into the form of entities, attributes, and unique instant answers. Input information provided by the screener 350 include questions and unique instant answers, and the semantic triple conversion module 360 may convert them into the form of entities, attributes, and unique instant answers. For the conversion, natural language processing (NLP) and natural language understanding (NLU) may be used.

Like as an actual semantic triple-based search service is provided, the semantic triple conversion module 360 analyzes a question and splits the information into an entity and an attribute. More particularly, when there is a question, "What is the height of Mt. Baekdu?" as shown in the example of FIG. 6, the question is split into an entity 'Mt. Baekdu' and an attribute 'height' by using an NLP technique and an NLU technique. Next, a derived unique instant answer may be paired with the corresponding entity and the corresponding attribute and finally stored in the semantic triple form.

Also, components for the NLP technique and the NLU technique used by the semantic triple conversion module 360 may include a morphological dictionary needed for basic understanding of natural language, entities, an attribute DB, a rule-based sentence structure analyzer, and a similar question mapping technique through word embedding utilizing deep learning technique.

Next, when the semantic triple conversion module 360 generates and transmits an entity, an attribute, and a unique instant answer, the semantic triple adder 370 may automatically add a new/updated semantic triple that reflects a corresponding DB.

Meanwhile, in an example of the semantic triple-based knowledge extension system according to one or more embodiments, an administrator page may be additionally provided. An administrator may manage the entire system by using the administrator page and manually modify/delete/update/add semantic triples. In detail, the administrator may use the administrator page to adjust the operation cycle and the operation of a semantic triple-based knowledge extension platform operation (periodic update, system manual operation availability), check generated questions and actual users' questions, and generate questions of different patterns by adding a rule-based question generating rule in a question generating module. Also, the administrator may use the administrator page to designate TF-IDF scores of passage searching modules, designate the maximum number of passages to be transmitted, and add/delete MRC QA algorithms in the semantic triple extractor 340. Also, the administrator may use the administrator page to set the initial reliability of the screener 350, check overall results, manually add semantic triples, and check other system monitoring information.

A semantic triple-based knowledge extension system according to one or more embodiments may provide a unique instant answer with high accuracy. A semantic triple-based knowledge extention method according to one or more embodiments may differ from existing search engines in that search results are provided in the form of a unique instant answer, that is, an immediate answer instead of a document.

Also, a semantic triple-based knowledge extension system according to an embodiment may, for knowledge extension, establish a semantic triple-based knowledge extension platform by combining a special type of knowledge base (KB) called semantic triple, a machine reading comprehension (MRC) technique to find an answer to a question within a paragraph, and a self-developed technique to find the corresponding paragraph through the traditional information retrieval (IR) scheme.

One or more embodiments described above may be implemented in the form of a computer program that can be executed through various components on a computer, such a computer program may be recorded on a computer-readable recording medium. In this case, the computer-readable recording medium may permanently store a program executable by the computer or temporarily store a program for execution or download. In addition, the computer-readable recording medium may be one of various types of recording means or storage means in the form of a single hardware unit or a combination of several hardware units and may be, without being limited to a medium directly connected to any computer system, distributed over a network. Examples of media may include magnetic media such as hard disks, floppy disks, and magnetic tape, optical recording media such as CD-ROMs and DVDs, magneto-optical media such as floptical disks, and storage device including ROM, RAM, flash memory, etc. to store program instructions. In addition, examples of other media may include an app store for distributing applications, a website for supplying or distributing various software, a recording medium or a storage medium managed by a server, etc.

According to one or more embodiments, a unique instant answer with high accuracy may be provided.

In addition, according to one or more embodiments, questions and answers may be automatically generated and converted into the form of semantic triples including entities, attributes, and instant answers, and the semantic triples may be added to a DB.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A semantic triple-based knowledge extension system comprising:
a data updater configured to update existing semantic triple data;
a question generating module configured to generate a question by utilizing and combining entity synonyms and attribute synonyms;
an actual question obtaining unit configured to obtain actual user questions based on user logs;
a semantic triple extractor configured to obtain a question generated by the question generating module or an actual user question as an input value, first select a relevant passage candidate group according to characteristics of the question and spcifies a search target, search for a passage relevant to the corresponding question, and derive a unique instant answer based on a retrieved passage and question data; and
a semantic triple conversion module configured to convert a unique instant answer, which is a correct answer, and a question into the form of a semantic triple including an entity, an attribute, and an instant answer.

2. The semantic triple-based knowledge extension system of claim 1,
wherein,
in entire semantic triple data, the question generating module looks up and combines entity fields and attribute fields, links an entity DB and an attribute DB by particular categories, and extends the number of questions to be generated by utilizing synonym information.

3. The semantic triple-based knowledge extension system of claim 1,
further comprising a screener configured to determine a unique instant answer, which is a correct answer,
wherein,
when a plurality of unique instant answers obtained based on question data are the same or self-reliability is equal to or higher than a particular critical value, the screener determines the unique instant answers as a correct answer.

4. A semantic triple-based knowledge extension method comprising:
a data updating operation for updating existing semantic triple data;
a question generating operation for generating a question by utilizing and combining entity synonyms and attribute synonyms;
an actual question obtaining operation for obtaining actual user questions based on user logs;
a semantic triple extracting operation for obtaining a question generated by a question generating module or an actual user question as an input value, selecting a first relevant passage candidate group according to characteristics of the question and specifying a search target, searching for a passage relevant to the corresponding question, and deriving a unique instant answer based on a retrieved passage and question data; and
a semantic triple conversion operation for converting a unique instant answer, which is a correct answer, and a question into the form of a semantic triple including an entity, an attribute, and an instant answer.

5. The semantic triple-based knowledge extension method of claim 4,
wherein, in the question generating operation,
in the entire semantic triple data, entity fields and attribute fields are looked up and combined, an entity DB (DB) and an attribute DB are linked by particular categories, and the number of questions to be generated is extended by utilizing synonym information.

6. The semantic triple-based knowledge extension method of claim 4,
further comprising a screening operation for determining a unique instant answer, which is a correct answer,
wherein, in the screening operation,
when a plurality of unique instant answers obtained based on question data are the same or self-reliability is equal to or higher than a particular critical value, the unique instant answers are determined as a correct answer.

7. A semantic triple-based knowledge extension system comprising:
a question generating module configured to generate a question by utilizing and combining entity synonyms and attribute synonyms;
a semantic triple extractor configured to derive a unique instant answer for the generated question;
a screener configured to determine a result of the semantic triple extractor and generate a unique instant answer, which is a correct answer, and a question; and
a semantic triple conversion module configured to convert a unique instant answer, which is a correct answer, and a question into the form of a semantic triple including an entity, an attribute, and an instant answer.

8. The semantic triple-based knowledge extension system of claim 7,
wherein the semantic triple extractor comprises:
a passage searching module configured to perform search target targeting by first selecting a passage candidate group having relevance according to the characteristics of a question and search for a passage related to the question; and
a machine reading comprehension question and answer module configured to derive a unique instant answer based on an obtained passage and question data and derive a unique instant answer and a reliability of a corresponding answer for each of passages.

9. The semantic triple-based knowledge extension system of claim 7,
wherein,
in entire semantic triple data, the question generating module looks up and combines entity fields and attribute fields, links an entity DB (DB) and an attribute DB by particular categories, and extends the number of questions to be generated by utilizing synonym information.

10. A semantic triple-based knowledge extension method comprising:
a question generating operation for generating a question by utilizing and combining entity synonyms and attribute synonyms;
a semantic triple extracting operation for deriving a unique instant answer for the generated question;
a screening operation for determining a result of a semantic triple extractor and generating a unique instant answer, which is a correct answer and a question; and
a semantic triple conversion operation for converting a unique instant answer, which is a correct answer, and a question into the form of a semantic triple including an entity, an attribute, and an instant answer.

11. The semantic triple-based knowledge extension method of claim 10,
wherein the semantic triple extracting operation comprises:
a passage searching operation for performing search target targeting by first selecting a passage candidate group having relevance according to the characteristics of a question and searching for a passage related to the question; and
a machine reading comprehension question and answer operation for deriving a unique instant answer based on an obtained passage and question data and deriving a unique instant answer and a reliability of a corresponding answer for each of passages.

12. The semantic triple-based knowledge extension method of claim 10,
wherein, in the question generating operation,
in entire semantic triple data, entity fields and attribute fields are looked up and combined, an entity DB (DB) and an attribute DB are linked by particular categories, and the number of questions to be generated is extended by utilizing synonym information.
